# EUROPEAN PATENT SPECIFICATION

(11) **EP 1 846 651 B1**
(45) Date of publication and mention of the grant of the patent: **22.06.2016**
(21) Application number: 06700978.7
(22) Date of filing: 25.01.2006
(51) Int. Cl.: F02M 26/28, F02M 26/24, F02M 26/30, F02M 26/05

(54) **ARRANGEMENT FOR RECIRCULATION OF EXHAUST GASES OF AN INTERNAL COMBUSTION ENGINE IN A VEHICLE**
ANORDNUNG FÜR DIE RÜCKFÜHRUNG VON ABGASEN EINES BRENNKRAFTMOTORS IN EINEM FAHRZEUG
DISPOSITIF DE RECIRCULATION DES GAZ D'ECHAPPEMENT D'UN MOTEUR A COMBUSTION INTERNE DE VEHICULE

(30) Priority: 02.02.2005 SE 0500243
(43) Date of publication of application: 24.10.2007
(73) Proprietor: Scania CV AB (publ), 151 87 Södertälje (SE)
(72) Inventor: KARDOS, Zoltan, S-151 35 Södertälje (SE); ALSTERDAL, Thomas, S-151 46 Södertälje (SE); ÅKESON, Johan, S-640 61 Stallarholmen (SE)
(74) Representative: Scania CV AB
(86) International application number: PCT/SE2006/000103
(87) International publication number: WO 2006/083211

(56) References cited:
- WO-A1-88/06679
- WO-A1-03/102396
- DE-A1- 19 853 455
- FR-A1- 2 840 363
- JP-A- 2004 092 443

## Description

The present invention relates to an arrangement for recirculation of exhaust gases of a combustion engine in a vehicle according to the preamble of claim 1.

The technique referred to as EGR (Exhaust Gas Recirculation) is a known means of recirculating part of the exhaust gases from a combustion process in a combustion engine, via a return line, to an inlet line for supply of air to the combustion engine. A mixture of air and exhaust gases is thus supplied to the engine's cylinders in which combustion takes place. Adding exhaust gases to the air causes a lower combustion temperature which results inter alia in a lower content of nitrogen oxides (NOₓ) in the exhaust gases. This technique is used for both Otto engines and diesel engines. The recirculating exhaust gases are usually cooled in a so-called EGR cooler before being led to the combustion engine. An existing circulating coolant in the combustion engine's cooling system is usually used for cooling the exhaust gases in the EGR cooler.

Providing such recirculation of exhaust gases entails arranging a return line in an engine space of the vehicle. The purpose of such a return line is to lead exhaust gases from an exhaust line arranged on the hot side of the combustion engine to an inlet line for air arranged on the cold side of the combustion engine. The return line comprises a number of components such as an EGR valve for controlling the exhaust flow through the return line, an EGR cooler for cooling the recirculating exhaust gases, and pipeline portions for leading exhaust gases from the hot side to the cold side. The location of the EGR cooler in the vehicle is usually such that the return line has to be unnecessarily long and space-consuming. An example of such an arrangement is shown in JP-2004092443.

### SUMMARY OF THE INVENTION

The object of the present invention is to provide an arrangement which effects recirculation of exhaust gases of a combustion engine whereby the return line can be of substantially minimum length and arrangement as a whole be made compact and less space-consuming.

This object is achieved with the arrangement of the kind mentioned in the introduction which is characterised by the features indicated in the characterising part of claim 1. Fitting the EGR cooler close to the combustion engine makes it possible for the whole extent of the return line between the cold first side and the hot second side to be arranged close to the combustion engine. The return line can thus be of substantially minimum length. An EGR cooler situated close to the combustion engine can be fitted directly on the combustion engine or indirectly on it via, for example, tubular portions of the return line. The EGR cooler may take the form of an elongate heat exchanger with a rectilinear extent between an inlet portion and an outlet portion. Such an EGR cooler may constitute a considerable part of the return line. The tubular portions of the return line which carry the exhaust gases can therefore be made considerably shorter. An EGR cooler arranged in this way also makes it possible to have a return line which extends round the combustion engine from the first side to the second side with a minimum number of curved portions. A return line with a substantially minimum length and a minimum number of curved portions can have a compact shape such as to occupy a relatively small amount of space in the vehicle.

According to a preferred embodiment of the present invention, the EGR cooler is arranged on the same side of said vertical plane as the branched exhaust pipe. In this case, the EGR cooler is arranged on the hot side of the combustion engine. The recirculating exhaust gases can therefore be led to the EGR cooler substantially immediately after they leave the branched exhaust pipe via a shorter pipeline portion extending between the exhaust line and the EGR cooler. The EGR cooler takes with advantage the form of a counterflow heat exchanger in which the exhaust gases and the cooling medium flow in opposite directions in separate channels within the EGR cooler. With such an EGR cooler suitably dimensioned, the exhaust gases can be cooled to an outlet temperature which only slightly exceeds the inlet temperature of the cooling medium. The EGR cooler is preferably arranged at a higher level than the branched exhaust pipe. At this height level in the vehicle's engine space close to the hot side of the combustion engine there is usually space for fitting the EGR cooler. The EGR cooler may be arranged at least partly above the branched exhaust pipe. The closer the EGR cooler is fitted to the centrally situated vertical plane through the combustion engine, the shorter and more compact the return line can be.

According to another preferred embodiment of the invention, the EGR cooler is arranged on the same side of said vertical plane as the branched exhaust pipe. In this case, the EGR cooler is arranged on the cold side of the combustion engine. The EGR cooler may thus have an extent along at least part of the cold side of the combustion engine. The EGR cooler takes with advantage the form of a counterflow heat exchanger with an elongate shape. The EGR cooler is preferably arranged at a higher level than the branched exhaust pipe. At this level in the vehicle close to the cold side of the combustion engine there is usually an existing space for fitting the EGR cooler. The EGR cooler may be arranged at least partly above the branched exhaust pipe. With advantage, the EGR cooler is fitted substantially vertically above the branched exhaust pipe. This affords the possibility of a short and compact return line. The EGR cooler is preferably adapted to having a liquid cooling medium flowing through it. A liquid-cooled EGR cooler provides significantly more cooling capacity than a gas-cooled EGR cooler of comparable size. An EGR cooler in which a liquid cooling medium is used can therefore be of compact configuration.

According to another preferred embodiment of the invention, the arrangement comprises a plurality of EGR coolers, whereby at least one EGR cooler is arranged on the same side of said vertical plane as the branched exhaust pipe, and at least one EGR cooler is arranged on the same side of said vertical plane as the branched exhaust pipe. The exhaust gases can therefore be cooled in two steps. The EGR coolers may be cooled by circulating coolants from different cooling systems. The coolant in the cooling system which cools the combustion engine may be used for cooling the exhaust gases in the EGR cooler arranged on the hot side of the engine, and the coolant of a separate cooling system may be used for cooling the exhaust gases in the EGR cooler arranged on the cold side of the engine. With suitable configuration of the separate cooling system it is therefore possible to cool the exhaust gases as a second step down to a temperature close to the temperature of the surroundings.

According to another preferred embodiment of the invention, the combustion engine is arranged in the vehicle in such a way that said vertical plane through the combustion engine extends in the longitudinal direction of the vehicle, whereby the combustion engine has a forward wall surface and a rear wall surface and the return line extends from the first side to the second side via a line portion which has an extent round the rear wall surface of the combustion engine. There is usually better access to empty space for fitting the return line at the rear wall surface of the combustion engine than at the forward surface. It is nevertheless possible to have a line portion which has an extent round the forward wall surface of the combustion engine.

### BRIEF DESCRIPTION OF THE DRAWINGS

A preferred embodiment of the invention is described below by way of example with reference to the attached drawings, in which:
- Fig. 1: depicts schematically an arrangement for recirculation of exhaust gases of a supercharged combustion engine,
- Fig. 2: depicts the arrangement in Fig. 1 in more detail,
- Fig. 3: depicts the arrangement in Fig. 2 as viewed from the cold side of the combustion engine.

### DETAILED DESCRIPTION OF A PREFERRED EMBODIMENT OF THE INVENTION

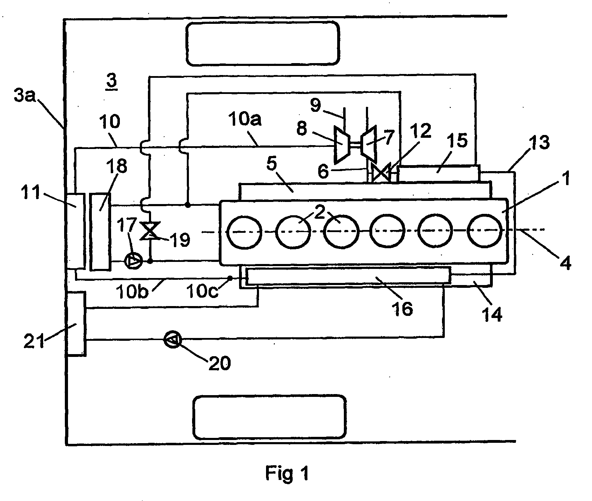

Fig. 1 depicts an arrangement for recirculation of exhaust gases of a supercharged combustion engine which in this case is a diesel engine 1 with six cylinders 2. The diesel engine 1 is fitted in a schematically depicted vehicle 3 which may be a heavy vehicle. A front surface 3a is indicated on the vehicle. A vertical plane 4 is marked as extending substantially centrally through the diesel engine 1 and its cylinders 2. The diesel engine 1 is fitted in the vehicle 3 in such a way that said vertical plane 4 extends in the longitudinal direction of the vehicle. Exhaust gases from combustion processes in the cylinders 2 of the diesel engine 1 are led, via a branched exhaust pipe 5, to an exhaust line 6. The exhaust gases in the exhaust line 6, which are at a positive pressure, drive a turbine 7. The turbine 7 is thus provided with driving power which is transmitted, via a connection, to a compressor 8. The compressor 8 compresses air drawn in via an inlet 9. A first portion 10a of an inlet line 10 leads the compressed air to a charge air cooler 11 situated at the front portion 3a of the vehicle. After the compressed air has been cooled in the charge air cooler 11 by ambient air, it is led further via a second portion 10b of the inlet line.

Recirculation of exhaust gases is usually called EGR (Exhaust Gas Recirculation). Adding exhaust gases to the compressed air which is led to the engine's cylinders lowers the combustion temperature and hence also the content of nitrogen oxides (NOₓ) formed during combustion processes in the cylinders 2. An arrangement for providing recirculation of part of the exhaust gases in the exhaust line 6 comprises a return line 13 extending between the exhaust line 6 and the second portion 10b of the inlet line. The return line 13 comprises an EGR valve 12 by which the exhaust flow in the return line 13 can be shut off as necessary. The EGR valve 12 can also be used for controlling the amount of exhaust gases led from the exhaust line 6 via the return line 13 to the second portion 10b of the inlet line. The return line 13 comprises a first EGR cooler 15 and a second EGR cooler 16 for cooling the recirculating exhaust gases. The exhaust gases are cooled in the first EGR cooler 15 by a circulating coolant of an ordinary cooling system which is primarily intended to cool the diesel engine 1 during operation of the vehicle. The coolant is circulated in the ordinary cooling system by a coolant pump 17. The coolant is cooled by ambient air when it is led through a radiator element 18 fitted at the front portion 3a of the vehicle. A valve 19 can be used to provide an adjustable coolant flow in a parallel cooling circuit which leads the coolant through the first EGR cooler 15. After passing through the first EGR cooler 15, the coolant is led back to the ordinary cooling system. The exhaust gases are cooled in the second EGR cooler 16 by circulating coolant of a separate cooling system of the vehicle. The coolant is circulated in the separate cooling system by a coolant pump 20. The coolant is cooled by ambient air when it is led through a radiator element 21 fitted at the front portion 3a of the vehicle. After cooling in the first EGR cooler 15 and the second EGR cooler 16, the exhaust gases are mixed with compressed air at the point 10c of the inlet line.

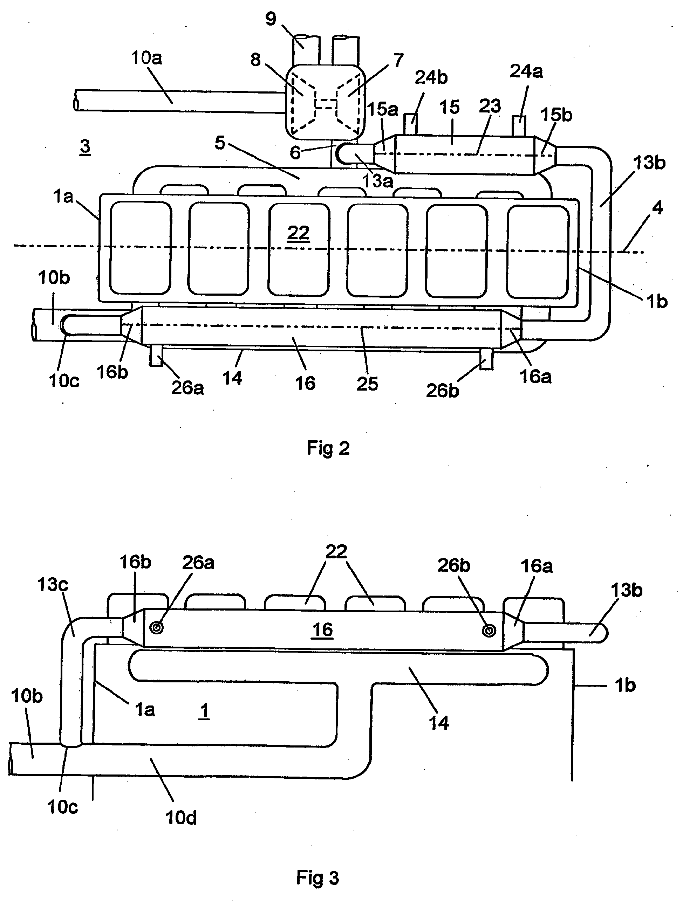

Figs. 2 and 3 depict the arrangement for recirculation of exhaust gases in more detail. The diesel engine 1 is an in-line engine with six cylinder heads 22 which each contain a cylinder 2. The return line 13 for the exhaust gases comprises a first tubular portion 13a extending between the exhaust line 6 and the first EGR cooler 15. The first tubular portion 13a of the return line comprises at a suitable point the EGR valve 12. The first tubular portion 13a extends substantially upwards from the exhaust line 6 so that the first EGR cooler 15 has a position at a higher level than the branched exhaust pipe 5. The first EGR cooler 15 is fitted on the hot side of the diesel engine 1, partly above the branched exhaust pipe 5, in a space not normally used by other components of the vehicle. The first EGR cooler 15 comprises an inlet portion 15a and an outlet portion 15b for the recirculating exhaust gases. The first EGR cooler 15 is fitted in relation to the diesel engine 1 in such a way that a vertical plane 23 which extends centrally between the inlet portion 15a and the outlet portion 15b in the longitudinal direction of the EGR cooler is substantially parallel with said vertical plane 4 through the diesel engine 1. The first EGR cooler 15 has an inlet 24a and an outlet 24b for coolant of the parallel circuit which is connected to the ordinary cooling system.

The return line 13 for exhaust gases comprises a second tubular portion 13b extending between the first EGR cooler 15 and the second EGR cooler 16. The diesel engine 1 is fitted in the vehicle 3 in such a way that it has a substantially transverse forward wall surface 1a relative to said vertical plane 4 and a substantially transverse rear wall surface 1b. The second tubular portion 13b of the return line has a transverse extent from the hot side of the diesel engine 1 to the cold side of the diesel engine 1 round the transverse rear wall surface 1b. More space is usually available at the rear wall surface 1b than at the diesel engine's forward wall surface 1a. The second tubular portion 13b has a substantially horizontal extent, with the result that the second EGR cooler 16 is positioned at a height level corresponding to the first EGR cooler 15. The second EGR cooler 16 is fitted on the cold side of the diesel engine 1 above the branched inlet pipe 14. Here there is a space not normally used by other components of the vehicle. The second EGR cooler 16 comprises an inlet portion 16a and an outlet portion 16b for the recirculating exhaust gases. The second EGR cooler 16 is fitted in such a way relative to the diesel engine 1 that a vertical plane 25 extending in the longitudinal direction of the EGR cooler centrally between the inlet portion 16a and the outlet portion 16b is substantially parallel with said vertical plane 4 through the diesel engine 1. The second EGR cooler 16 has an inlet 26a and an outlet 26b for the circulating coolant of the separate cooling system.

The return line 13 for exhaust gases comprises finally a third tubular portion 13c extending between the second EGR cooler 16 and the point 10c of the inlet line. The return line's third tubular portion 13c extends substantially vertically downwards from the second EGR cooler 16 to the second portion 10b of the inlet line, as may be seen in Fig. 3. The inlet line 10 ends with a third tubular portion 10d which leads the mixture of air and exhaust gases to the branched inlet pipe 14. The third tubular portion 10d of the inlet line ends with a portion extending vertically upwards which is connected to a central portion of the branched inlet pipe 14. The mixture of compressed air and recirculating exhaust gases is led via the branched inlet pipe 14 to the respective cylinders 2 of the combustion engine.

Each of the EGR coolers 15, 16 is of counterflow heat exchanger construction whereby the exhaust gases flow within the EGR-coolers 15,16 in one direction and the coolant in an opposite direction in separate channels which are separated by heat-transferring surfaces. With sufficiently elongate EGR coolers 15, 16, the exhaust gases can be cooled to a temperature substantially corresponding to the temperature of the circulating coolant. The EGR coolers 15, 16 constitute substantially rectilinear portions of the return line 13 on opposite sides of the diesel engine 1. The tubular portions 13a, b, c of the return line can therefore be of reduced extent. With such an arrangement of the EGR coolers 15, 16 it is possible to have a return line 13 which extends round the combustion engine from the first side to the second side with a substantially minimum length and a minimum number of curves. Such a return line 13 is of compact configuration and therefore occupies relatively little space in the vehicle's engine space.

During operation of the diesel engine 1, the exhaust gases in the exhaust line 6 drive a turbine 7 before they are led out to the surroundings. The turbine 7 is thus provided with driving power which powers the compressor 8. The compressor 8 compresses the air led in via the inlet 9. The compressed air is led via the first portion 10a of the return line to the charge air cooler 11, in which it is cooled by ambient air. Compressed air in the charge air cooler 11 can be cooled to a temperature which exceeds the temperature of the surroundings by only a few degrees. In most operating states of the diesel engine 1, the EGR valve is open, with the result that part of the exhaust gases in the exhaust line 6 is led into the return line 13. Exhaust gases in the exhaust line 6 are usually at a temperature of about 600-700°C. When the exhaust gases in the return line 13 reach the first EGR cooler 15, they are subjected to cooling as a first step. However, the first EGR cooler 15 can only cool the exhaust gases to a temperature corresponding to the temperature of the coolant in the ordinary cooling system. During normal operation, the temperature of the coolant in the ordinary cooling system is within the range 80-100°C. The exhaust gases can therefore only be cooled to this temperature in the first EGR cooler 15. After cooling in the first EGR cooler 15, the exhaust gases are led to the second EGR cooler 16 where they are cooled as a second step by the coolant of the separate cooling system. The coolant flow in the separate cooling system can be regulated so that the coolant is cooled to a temperature substantially corresponding to the temperature of the surroundings in the radiator element 21. To achieve such cooling of the coolant, the flow through the radiator element 21 needs to be relatively small. With such a configuration of the separate cooling system the coolant can cool the exhaust gases in the second EGR cooler 16 to a temperature which exceeds the temperature of the surroundings by only a few degrees. Exhaust gases in the second EGR cooler 13 are thus subjected to cooling to substantially the same temperature level as compressed air in the charge air cooler 11. The cooled exhaust gases are mixed with compressed air at the point 10c of the inlet line, followed by the mixture being led to the combustion engine 1. In certain operating states of supercharged diesel engines 1, the pressure of the exhaust gases in the return line 13 is lower than the pressure of the compressed air in the inlet line 10b. Auxiliary means such as a venturi can be used for local lowering of the static pressure of the air in the inlet line 10 at the connection 10c to the return line 13, so that exhaust gases can be led in and mixed with compressed air in the inlet line.

The invention is in no way limited to the embodiment described with reference to the drawings but may be varied freely within the scopes of the claims. The combustion engine may be of substantially any desired kind. The return line may comprise only one EGR cooler 15, 16. This may be the case where smaller combustion engines are used or where it is only necessary to cool a smaller amount of recirculating exhaust gases. The EGR coolers 15, 16 and the tubular portions 13a, b, c may be manufactured as modules in certain dimensions and lengths. With a number of such modules, return lines can be fitted to combustion engines of different sizes and types.

## Claims

1. An arrangement for recirculation of exhaust gases of a combustion engine (1) in a vehicle, whereby the combustion engine comprises a branched inlet pipe (14), fastened to the combustion engine (1) on a first side of a vertical plane (4) which extends centrally through the combustion engine (1), for supplying air and recirculating exhaust gases to at least two cylinders (2) of the combustion engine (1), and a branched exhaust pipe (5), fastened to the combustion engine (1) on a second side of said centrally situated vertical plane (4), for leading the exhaust gases from at least two cylinders (2) of the combustion engine (1) to an exhaust line (6), whereby the arrangement comprises a return line (13) which connects the exhaust line (6) to an the inlet line (10) for supply of air to the combustion engine (1), so that it is possible to recirculate exhaust gases from the exhaust line (6) to the inlet line (10), and first EGR cooler (15) for cooling the recirculating exhaust gases in the return line (13), wherein the first EGR cooler (15) is fitted close to the combustion engine (1) at such a position that a vertical plane (23, 25) extending substantially centrally between an inlet portion (15a) and an outlet portion (15b) for recirculating exhaust gases of the EGR cooler is substantially parallel with said vertical plane (4) through the combustion engine (1) and that the first EGR cooler (15) is arranged on the same side of said vertical plane (4) as the branched exhaust pipe (5), **characterised in that** the arrangement comprises a second EGR cooler (16) for cooling the recirculating exhaust gases in the return line (13), wherein the second EGR cooler (16) is fitted close to the combustion engine (1) at such a position that a vertical plane (23, 25) extending substantially centrally between an inlet portion (16a) and an outlet portion (16b) for recirculating exhaust gases of the EGR cooler is substantially parallel with said vertical plane (4) through the combustion engine (1) and that the second EGR cooler (16) is arranged on the same side of said vertical plane (4) as the branched inlet pipe (14).

2. An arrangement according to claim 1, **characterised in that** the first EGR cooler (15) is arranged at a higher level than the branched exhaust pipe (5).

3. An arrangement according to claim 2, **characterised in that** the first EGR cooler (15) is arranged at a position situated at least partly above the branched exhaust pipe (5).

4. An arrangement according to any one of the foregoing claims, **characterised in that** the second EGR cooler (16) is arranged at a position situated at a higher level than the branched inlet pipe (14).

5. An arrangement according to claim 4, **characterised in that** the second EGR cooler (16) is arranged at a position situated at least partly above the branched inlet pipe (14).

6. An arrangement according to any one of the foregoing claims, **characterised in that** the first and second EGR coolers (15, 16) are adapted to having a liquid cooling medium flowing through it for cooling the exhaust gases.

7. An arrangement according to any one of the foregoing claims, **characterised in that** the combustion engine (1) is arranged in the vehicle (3) in such a way that said vertical plane (4) through the combustion engine (1) extends in the longitudinal direction of the vehicle, whereby the combustion engine (1) has a forward wall surface (1a) and a rear wall surface (1b) which are substantially perpendicular to said vertical plane (4), and whereby the return line (13) extends between the first side and the second side via a line portion (13b) which has an extent round the rear wall surface (1b) of the combustion engine.

## Patentansprüche

1. Anordnung zur Rückführung von Abgasen eines Verbrennungsmotors (1) in einem Fahrzeug, wobei der Verbrennungsmotor ein verzweigtes Einlassrohr (14), das an dem Verbrennungsmotor (1) auf einer ersten Seite einer vertikalen Ebene (4) befestigt ist, welche sich zentral durch den Verbrennungsmotor (1) erstreckt, zur Luftversorgung und um Abgase zu mindestens zwei Zylindern (2) des Verbrennungsmotors (1) zurückzuführen, und ein verzweigtes Abgasrohr (5) umfasst, das an dem Verbrennungsmotor (1) auf einer zweiten Seite der zentral befindlichen vertikalen Ebene (4) befestigt ist, um die Abgase von mindestens zwei Zylindern (2) des Verbrennungsmotors (1) zu einer Abgasleitung (6) zu führen, wobei die Anordnung eine Rücklaufleitung (13), welche die Abgasleitung (6) mit einer Zuleitung (10) zur Luftversorgung des Verbrennungsmotors (1) verbindet, so dass es möglich ist Abgase von der Abgasleitung (6) zu der Zuleitung (10) zurückzuführen, und einen ersten EGR-Kühler (15) zum Kühlen der zurückgeführten Abgase in der Rücklaufleitung (13) umfasst, wobei der erste EGR-Kühler (15) nahe bei dem Verbrennungsmotor (1) an einer derartigen Position angebracht ist, dass eine vertikale Ebene (23, 25), die sich im Wesentlichen zentral zwischen einem Einlassbereich (15a) und einem Auslassbereich (15b) zum Zurückführen von Abgasen des EGR-Kühlers erstreckt, im Wesentlichen parallel zu der vertikalen Ebene (4) durch den Verbrennungsmotor (1) verläuft, und dass der erste EGR-Kühler (15) auf derselben Seite der vertikalen Ebene (4) wie das verzweigte Abgasrohr (15) angeordnet ist, **dadurch gekennzeichnet, dass** die Anordnung einen zweiten EGR-Kühler (16) zum Kühlen der zurückgeführten Abgase in der Rücklaufleitung (13) umfasst, wobei der zweite EGR-Kühler (16) nahe bei dem Verbrennungsmotor (1) an einer derartigen Position angebracht ist, dass eine vertikale Ebene (23, 25), die sich im Wesentlichen zentral zwischen einem Einlassbereich (16a) und einem Auslassbereich (16b) zum Zurückführen von Abgasen des EGR-Kühlers erstreckt, im Wesentlichen parallel zu der vertikalen Ebene (4) durch den Verbrennungsmotor (1) verläuft und dass der zweite EGR-Kühler (16) auf derselben Seite der vertikalen Ebene (4) wie das verzweigte Einlassrohr (14) angeordnet ist.

2. Anordnung nach Anspruch 1, **dadurch gekennzeichnet, dass** der erste EGR-Kühler (15) in einer höheren Ebene als das verzweigte Abgasrohr (5) angeordnet ist.

3. Anordnung nach Anspruch 2, **dadurch gekennzeichnet, dass** der erste EGR-Kühler (15) an einer Position angeordnet ist, die sich zumindest teilweise über dem verzweigten Abgasrohr (5) befindet.

4. Anordnung nach einem der vorangegangenen Ansprüche, **dadurch gekennzeichnet, dass** der zweite EGR-Kühler (16) an einer Position angeordnet ist, die sich in einer höheren Ebene als das verzweigte Einlassrohr (14) befindet.

5. Anordnung nach Anspruch 4, **dadurch gekennzeichnet, dass** der zweite EGR-Kühler (16) an einer Position angeordnet ist, die sich zumindest teilweise über dem verzweigten Einlassrohr (14) befindet.

6. Anordnung nach einem der vorangegangenen Ansprüche, **dadurch gekennzeichnet, dass** die ersten und zweiten EGR-Kühler (15, 16) dazu ausgebildet sind, ein flüssiges Kühlmedium aufzuweisen, das zur Kühlung der Abgase durch diese fließt.

7. Anordnung nach einem der vorangegangenen Ansprüche, **dadurch gekennzeichnet, dass** der Verbrennungsmotor (1) in dem Fahrzeug (3) derart angeordnet ist, dass sich die vertikale Ebene (4) durch den Verbrennungsmotor (1) in Längsrichtung des Fahrzeugs erstreckt, wobei der Verbrennungsmotor (1) eine Vorderwandfläche (1a) und eine Rückwandfläche (1b) aufweist, welche im Wesentlichen senkrecht zu der vertikalen Ebene (4) verlaufen, und wobei sich die Rücklaufleitung (13) zwischen der ersten Seite und der zweiten Seite über einen Leitungsabschnitt (13b) erstreckt, welcher sich um die Rückwandfläche (1b) des Verbrennungsmotors erstreckt.

## Revendications

1. Dispositif pour la recirculation de gaz d'échappement d'un moteur à combustion (1) dans un véhicule, lequel moteur à combustion comprend un tuyau d'entrée ramifié (14), fixé au moteur à combustion (1) sur un premier côté d'un plan vertical (4) qui s'étend centralement à travers le moteur à combustion (1), pour amener de l'air et les gaz d'échappement en recirculation vers au moins deux cylindres (2) du moteur à combustion (1), et un tuyau d'échappement ramifié (5), fixé au moteur à combustion (1) sur un deuxième côté dudit plan vertical (4) situé centralement, pour mener les gaz d'échappement depuis au moins deux cylindres (2) du moteur à combustion (1) vers une conduite d'échappement (6), lequel dispositif comprend une conduite de retour (13) qui connecte la conduite d'échappement (6) à une conduite d'entrée (10) pour amener de l'air au moteur à combustion (1), de telle sorte qu'il soit possible de faire recirculer des gaz d'échappement de la conduite d'échappement (6) vers la conduite d'entrée (10), et un premier refroidisseur d'EGR (15) pour refroidir les gaz d'échappement en recirculation dans la conduite de retour (13), lequel premier refroidisseur d'EGR (15) est monté à proximité du moteur à combustion (1) à une position telle qu'un plan vertical (23, 25) s'étendant essentiellement centralement entre une portion d'entrée (15a) et une portion de sortie (15b) pour les gaz d'échappement en recirculation du refroidisseur d'EGR soit essentiellement parallèle audit plan vertical (4) à travers le moteur à combustion (1) et telle que le premier refroidisseur d'EGR (15) soit disposé du même côté dudit plan vertical (4) que le tuyau d'échappement ramifié (5), **caractérisé en ce que** le dispositif comprend un deuxième refroidisseur d'EGR (16) pour refroidir les gaz d'échappement en recirculation dans la conduite de retour (13), lequel deuxième refroidisseur d'EGR (16) est monté à proximité du moteur à combustion (1) à une position telle qu'un plan vertical (23, 25) s'étendant essentiellement centralement entre une portion d'entrée (16a) et une portion de sortie (16b) pour les gaz d'échappement en recirculation du refroidisseur d'EGR soit essentiellement parallèle audit plan vertical (4) à travers le moteur à combustion (1) et telle que le deuxième refroidisseur d'EGR (16) soit disposé du même côté dudit plan vertical (4) que le tuyau d'entrée ramifié (14).

2. Dispositif selon la revendication 1, **caractérisé en ce que** le premier refroidisseur d'EGR (15) est disposé à un niveau plus élevé que le tuyau d'échappement ramifié (5).

3. Dispositif selon la revendication 2, **caractérisé en ce que** le premier refroidisseur d'EGR (15) est disposé à une position située au moins en partie au-dessus du tuyau d'échappement ramifié (5).

4. Dispositif selon l'une quelconque des revendications précédentes, **caractérisé en ce que** le deuxième refroidisseur d'EGR (16) est disposé à une position située à un niveau plus élevé que le tuyau d'entrée ramifié (14).

5. Dispositif selon la revendication 4, **caractérisé en ce que** le deuxième refroidisseur d'EGR (16) est disposé à une position située au moins en partie au-dessus du tuyau d'entrée ramifié (14).

6. Dispositif selon l'une quelconque des revendications précédentes, **caractérisé en ce que** le premier et le deuxième refroidisseurs d'EGR (15, 16) sont adaptés à avoir un fluide de refroidissement liquide s'écoulant à travers eux pour refroidir les gaz d'échappement.

7. Dispositif selon l'une quelconque des revendications précédentes, **caractérisé en ce que** le moteur à combustion (1) est disposé dans le véhicule (3) de telle sorte que ledit plan vertical (4) à travers le moteur à combustion (1) s'étende dans la direction longitudinale du véhicule, dans lequel le moteur à combustion (1) a une surface de paroi avant (1a) et une surface de paroi arrière (1b) qui sont essentiellement perpendiculaires audit plan vertical (4), et dans lequel la conduite de retour (13) s'étend entre le premier côté et le deuxième côté via une portion de conduite (13b) qui s'étend autour de la surface de paroi arrière (1b) du moteur à combustion.
